# EUROPEAN PATENT APPLICATION

(11) **EP 3 780 156 A1**
(43) Date of publication of application: **17.02.2021**
(21) Application number: 20152168.9
(22) Date of filing: 16.01.2020
(51) Int. Cl.: H01M 2/26, H01M 10/058, H01M 2/02, H01M 10/0525

(54) **LITHIUM ION SECONDARY BATTERY AND MANUFACTURING METHOD OF THE SAME**

(30) Priority: 14.08.2019 KR 20190099457
(71) Applicant: HYUNDAI MOTOR COMPANY, Seoul 06797 (KR); Kia Motors Corporation, Seoul 06797 (KR)
(72) Inventor: PARK, Sang Mok, 06797 Seoul (KR); LIM, Sung Hoon, 06797 Seoul (KR)
(74) Representative: Viering, Jentschura & Partner mbB Patent- und Rechtsanwälte

(57) **Abstract**

A lithium ion secondary battery includes: a plurality of cathodes including a cathode current collector, a cathode coating layer coating the cathode current collector, and a cathode lead; a plurality of anodes including an anode current collector, an anode coating layer coating the anode current collector, and an anode lead; a separation membrane positioned between the cathodes and the anodes; first bent portions where a plurality of cathode leads are bent at points spaced apart from the cathode coating layer; second bent portions where the plurality of cathode leads are bent at points where the plurality of cathode leads bent at the first bent portions meet; and a first overlapping portion at which the plurality of cathode leads bent at the second bent portions overlap in parallel. The first overlapping portion includes a portion welded to the plurality of cathode leads overlapping in parallel and a non-welded portion.

## Description

### TECHNICAL FIELD

The present disclosure relates to a lithium ion secondary battery and a manufacturing method of the same, and more particularly, to a lithium ion secondary battery capable of increasing energy density and improving stability of a cell by forming non-welded portions having a predetermined length on a cathode lead and an anode lead.

### BACKGROUND

Recently, the application of lithium ion battery cells to electric vehicles is expanding, and the demand for high energy density battery cells is increasing to improve one-charging mileage of electric vehicles. In this regard, conventionally, the development is in progress toward designing a cell thickness to be thick, reducing a thickness of an electrode substrate, and reducing a space of a terrace portion in a tab direction in order to increase the number of electrode stacks and current density to increase energy density of the battery cells.

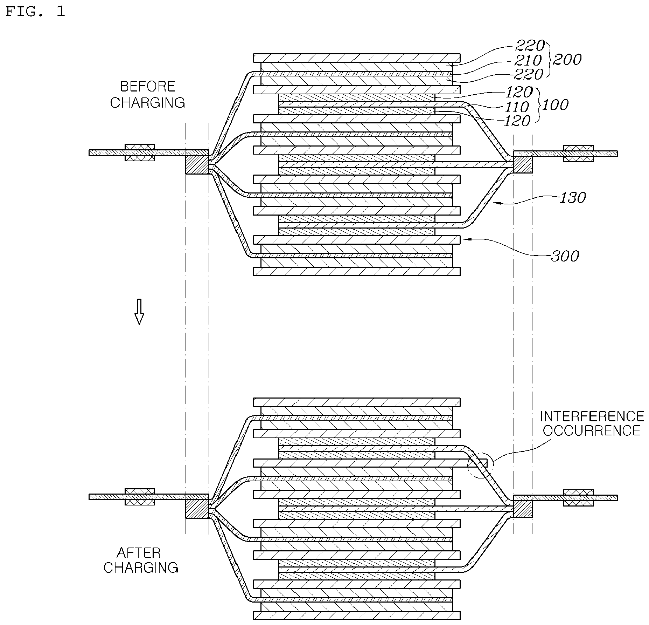

FIG. 1 is a view illustrating that interference between a cathode lead portion and an anode occurs when an electrode swells after a conventional lithium ion secondary battery is charged. As such, in the conventional lithium ion secondary battery, there was a problem in that the anode may be damaged due to the interference between the cathode lead portion and the anode when the electrode swells after the conventional lithium ion secondary battery is charged, and there was also a problem in that a short circuit between the cathode lead portion and the anode may occur to cause ignition.

The above information disclosed in this Background section is only for enhancement of understanding of the background of the present disclosure, and should not be taken as acknowledgement that this information forms the prior art that is already known to a person skilled in the art.

### SUMMARY

An object of the present disclosure is to provide a lithium ion secondary battery capable of increasing energy density and simultaneously improving stability of a cell by non-welded portions serving as a buffer when an electrode swells after charging, by forming the non-welded portions having a predetermined length on a cathode lead and an anode lead, and a manufacturing method of the same.

According to an exemplary embodiment of the present disclosure, a lithium ion secondary battery includes: a plurality of cathodes each including a cathode current collector, a cathode coating layer coating the cathode current collector, and a cathode lead; a plurality of anodes each including an anode current collector, an anode coating layer coating the anode current collector, and an anode lead; and a plurality of separation membranes arranged between the plurality of cathodes and the plurality of anodes, respectively. A plurality of cathode leads among the plurality of cathodes include first bent portions, respectively, at first points spaced apart from respective cathode coating layers by a predetermined distance. The plurality of cathode leads further include second bent portions, respectively, at second points where the plurality of cathode leads meet. The lithium ion secondary battery further includes a first overlapping portion at which the plurality of cathode leads overlap in parallel. The first overlapping portion includes a first welded portion to which the plurality of cathode leads are welded and a first non-welded portion to which the plurality of cathode leads are not welded.

The first welded portion is welded to end portions of the plurality of cathode leads overlapping in parallel and a remaining portion of the first overlapping portion is not welded to the end portions of the plurality of cathode leads.

The lithium ion secondary battery may further include a cathode tab disposed on a first end portion of the lithium ion secondary battery, wherein the first welded portion and the cathode tab are welded to each other at a cathode tab welded portion disposed therebetween, and wherein the second bent portions are spaced apart from an end of the cathode tab welded portion by a predetermined distance.

The first non-welded portion is arranged between the first welded portion and the second bent portions, and a length of the first non-welded portion may be 2 mm or more.

The first bent portions are spaced apart from an outermost one of the plurality of cathodes, the plurality of separation membranes, and the plurality of anodes.

A plurality of anode leads among the plurality of anodes include third bent portions, respectively, at third points spaced apart from respective anode coating layers by a predetermined distance. The plurality of anode leads further include fourth bent portions, respectively, at fourth points where the plurality of anode leads meet. The lithium ion secondary battery further includes a second overlapping portion where the plurality of anode leads at the fourth points overlap in parallel. The second overlapping portion includes a second welded portion to which the plurality of anode leads are welded and a second non-welded portion to which the plurality of anode leads are not welded.

The second welded portion is welded to end portions of the plurality of anode leads overlapping in parallel and a remaining portion of the second overlapping portion is not welded to the end portions of the plurality of anode leads.

The lithium ion secondary battery may further include an anode tab disposed on a second end portion of the lithium ion secondary battery, wherein the second welded portion and the anode tab are welded to each other at an anode tab welded portion disposed therebetween, and wherein the fourth bent portions are spaced apart from an end of the anode tab welded portion by a predetermined distance.

The second non-welded portion is arranged between the second welded portion and the fourth bent portions, and a length of the second non-welded portion may be 2 mm or more.

The third bent portions are spaced apart from an outermost one of the plurality of anodes, the plurality of separation membranes, and the plurality of cathodes.

According to another exemplary embodiment of the present disclosure, a manufacturing method of a lithium ion secondary battery includes steps of: stacking a plurality of anodes, a plurality of separation membranes, and a plurality of cathodes; forming a first overlapping portion by pressing and bending a plurality of cathode leads at first points spaced apart from respective cathode coating layers by a first predetermined distance and by overlapping and fixing the plurality of cathode leads in parallel at second points where the plurality of bent cathode leads meet; and welding a portion of the first overlapping portion to end portions of the plurality of cathode leads.

The step of forming a first overlapping portion includes steps of: simultaneously pressing and bending the plurality of cathode leads stacked in parallel from the top and bottom using a pair of lead fixing jigs at the first points spaced apart from the respective cathode coating layers by the first predetermined distance; and overlapping and fixing the plurality of cathode leads in parallel by pressing the plurality of bent cathode leads using the pair of lead fixing jigs until the plurality of cathode leads meet.

The step of forming a first overlapping portion includes steps of: simultaneously pressing and bending the plurality of cathode leads stacked in parallel from the top and bottom using a pair of lead fixing jigs including an air nozzle at the first points spaced apart from the respective cathode coating layers by the first predetermined distance; and overlapping and fixing the plurality of cathode leads in parallel by pressing the plurality of bent cathode leads using the pair of lead fixing jigs until the plurality of cathode leads meet.

The step of forming a first overlapping portion includes steps of: simultaneously pressing and bending the plurality of cathode leads stacked in parallel from the top and bottom using a pair of lead fixing jigs including a plurality of air nozzles at the first points spaced apart from the respective cathode coating layers by the first predetermined distance; and overlapping and fixing the plurality of cathode leads in parallel by pressing the plurality of bent cathode leads using the pair of lead fixing jigs until the plurality of cathode leads meet.

The step of simultaneously pressing and bending the plurality of cathode leads stacked in parallel from the top and bottom using a pair of lead fixing jigs including a plurality of air nozzles includes steps of: raising and lowering the pair of lead fixing jigs by a predetermined distance as air is ejected obliquely to an outermost side of the plurality of air nozzles from an air nozzle located at the outermost side of the plurality of air nozzles; and ejecting air from an air nozzle located at an innermost side of the plurality of air nozzles after raising and lowering the pair of lead fixing jigs by the predetermined distance.

The manufacturing method of a lithium ion secondary battery may further include a step of: before the step of simultaneously pressing and bending the plurality of cathode leads stacked in parallel from the top and bottom using a pair of lead fixing jigs including a plurality of air nozzles, inserting support pins in a direction perpendicular to the plurality of cathode leads in a direction in which the plurality of cathode leads are bent at points spaced apart from the respective cathode coating layers by a predetermined distance.

The manufacturing method of a lithium ion secondary battery may further include steps of: forming a second overlapping portion by pressing and bending a plurality of anode leads at points spaced apart from respective anode coating layers by the first predetermined distance and overlapping and fixing the plurality of anode leads in parallel at a point where the plurality of bent anode leads meet; and welding a portion of the second overlapping portion to end portions of the plurality of anode leads.

The step of forming a second overlapping portion includes steps of: simultaneously pressing and bending the plurality of anode leads stacked in parallel from the top and bottom using a pair of lead fixing jigs including an air nozzle at points spaced apart from the respective anode coating layers by the first predetermined distance; and overlapping and fixing the plurality of anode leads in parallel by pressing the plurality of bent cathode leads using the pair of lead fixing jigs until the plurality of bent cathode leads meet.

The step of forming a second overlapping portion includes steps of: simultaneously pressing and bending the plurality of anode leads stacked in parallel from the top and bottom using a pair of lead fixing jigs including a plurality of air nozzles at points spaced apart from the respective anode coating layers by the first predetermined distance; and overlapping and fixing the plurality of anode leads in parallel by pressing the plurality of bent cathode leads using the pair of lead fixing jigs until the plurality of bent cathode leads meet.

The step of simultaneously pressing and bending the plurality of anode leads stacked in parallel from the top and bottom using a pair of lead fixing jigs including a plurality of air nozzles includes: raising and lowering the pair of lead fixing jigs by a predetermined distance as air is ejected obliquely to an outermost side of the plurality of air nozzles from an air nozzle located at the outermost side of the plurality of air nozzles; and ejecting air from an air nozzle located at an innermost side of the plurality of air nozzles after raising and lowering the pair of lead fixing jigs by the predetermined distance.

The manufacturing method of a lithium ion secondary battery may further include: before the step of simultaneously pressing and bending the plurality of anode leads stacked in parallel from the top and bottom using a pair of lead fixing jigs including a plurality of air nozzles, inserting support pins in a direction perpendicular to the anode leads in a direction in which the plurality of anode leads are bent at points spaced apart from the respective anode coating layers by a predetermined distance.

### BRIEF DESCRIPTION OF THE DRAWINGS

FIG. 1 is a view illustrating that interference between a cathode lead portion and an anode occurs when an electrode swells after a conventional lithium ion secondary battery is charged.
FIG. 2 is a view illustrating a structure of a lithium ion secondary battery according to an exemplary embodiment of the present disclosure.
FIG. 3 is a flowchart illustrating a manufacturing method of a lithium ion secondary battery according to an exemplary embodiment of the present disclosure.
FIG. 4 is a view for describing the manufacturing method of a lithium ion secondary battery according to an exemplary embodiment of the present disclosure.
FIG. 5 is a view for describing a manufacturing method of a lithium ion secondary battery according to another exemplary embodiment of the present disclosure.
FIG. 6 is a view illustrating figures before and after charging of the lithium ion secondary battery manufactured according to the manufacturing method of a lithium ion secondary battery according to an exemplary embodiment of the present disclosure.

### DETAILED DESCRIPTION

Hereinafter, the present disclosure will be described in detail with reference to the drawings. Terms and words used in the present specification and claims are not to be construed as a general or dictionary meaning but are to be construed as meaning and concepts meeting the technical ideas of the present disclosure based on a principle that the inventor can appropriately define the concepts of terms in order to describe their own disclosure in best mode.

Therefore, configurations described in embodiments and the accompanying drawings of the present disclosure do not represent all of the technical spirits of the present disclosure, but are merely most preferable embodiments. Therefore, the present disclosure should be construed as including all the changes, equivalents, and substitutions included in the spirit and scope of the present disclosure at the time of filing the application.

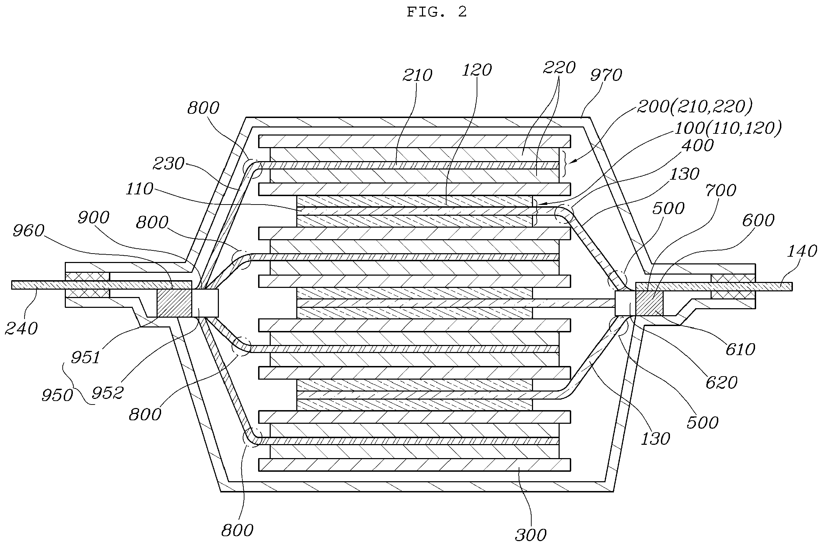

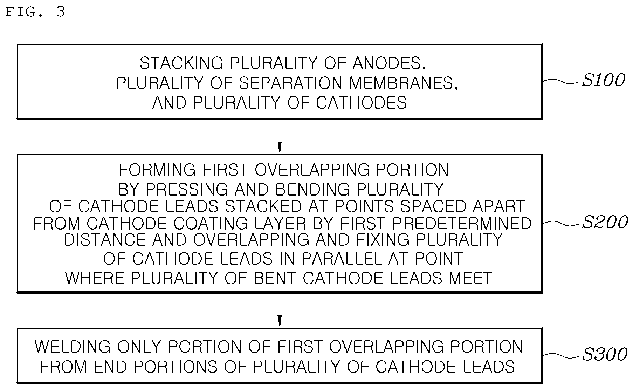

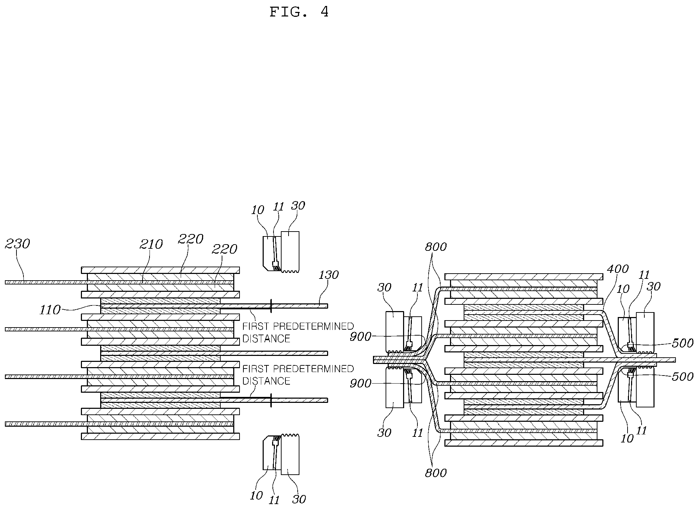

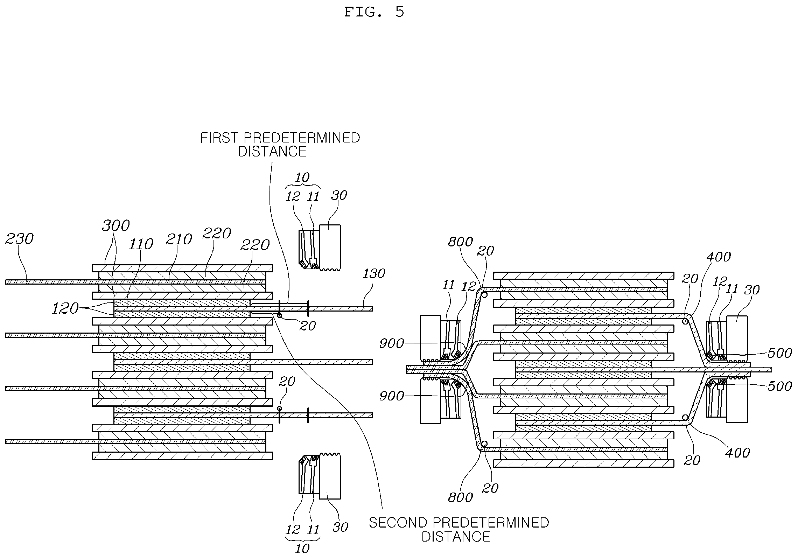

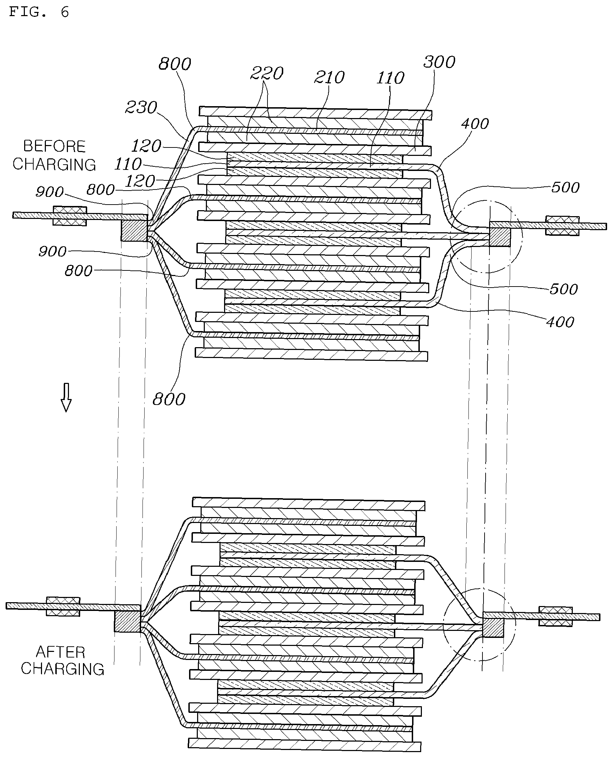

FIG. 2 is a view illustrating a structure of a lithium ion secondary battery according to an exemplary embodiment of the present disclosure. In addition, FIG. 3 is a flowchart illustrating a manufacturing method of a lithium ion secondary battery according to an exemplary embodiment of the present disclosure, FIG. 4 is a view for describing the manufacturing method of a lithium ion secondary battery according to an exemplary embodiment of the present disclosure, FIG. 5 is a view for describing a manufacturing method of a lithium ion secondary battery according to another exemplary embodiment of the present disclosure, and FIG. 6 is a view illustrating figures before and after charging of the lithium ion secondary battery manufactured according to the manufacturing method of a lithium ion secondary battery according to an exemplary embodiment of the present disclosure.

As illustrating in FIG. 2, a lithium ion secondary battery according to an exemplary embodiment of the present disclosure may include cathodes 100, anodes 200, separation membranes 300, first bent portions 400, second bent portions 500, and a first overlapping portion 600, and may further include third bent portions 800, fourth bent portions 900, and a second overlapping portion 950. Further, the lithium ion secondary battery may further include a case 970 covering an assembled battery cell.

The cathode 100 may include a cathode current collector 110, a cathode coating layer 120 coating the cathode current collector 110, and a cathode lead 130. Here, any cathode current collector 110 may be used as long as it is a conductor and is electrochemically stable within the range of use, and the cathode current collector 110 may be aluminum, stainless steel, nickel plated steel, or the like according to an exemplary embodiment.

In addition, the cathode coating layer 120 may include a cathode active material layer formed on the cathode current collector 110 and including a cathode active material, and a coating layer formed on the cathode active material layer and including a conductive material and a binder. Here, the cathode active material is a solid solution oxide including lithium according to an exemplary embodiment, but is not particularly limited as long as it is a material capable of electrochemically occluding and releasing lithium ions.

The cathode lead 130 is a portion where the cathode coating layer 120 is not formed on the cathode current collector 110 and is welded with a cathode lead tab to serve to flow electricity to the outside.

The anode 200 may include an anode current collector 210, an anode coating layer 220 coating the anode current collector 210, and an anode lead 230. Here, any anode current collector 210 may be used as long as it is a conductor and is electrochemically stable within the range of use, and the anode current collector 210 may be copper, aluminum, stainless steel, nickel plated steel, or the like according to an exemplary embodiment, but is not limited thereto.

The anode coating layer 220 may include an anode active material layer formed on some regions on the anode current collector 210 and including an anode active material, and a coating layer formed on the anode active material layer and including one or more of a conductive material and a binder. The anode active material may include a metal-based active material and a carbon-based active material, where the metal-based active material may include a silicon-based active material, a tin-based active material, or a combination thereof, and the carbon-based active material is a material including carbon (atoms) and capable of electrochemically occluding and releasing lithium ions at the same time and may be a graphite active material, artificial graphite, natural graphite, a mixture of artificial graphite and natural graphite, natural graphite coated with artificial graphite, and the like, but is not limited thereto.

The anode lead 230 is a portion where the anode coating layer 220 is not formed on the anode current collector 210 and is welded with an anode lead tab to serve to flow electricity to the outside.

The separation membrane 300 is positioned between the cathode 100 and the anode 200 to serve to electrically separate the cathode 100 and the anode 200, and may be formed as a porous membrane through which ions may move between the cathode 100 and the anode 200.

Hereinafter, the first bent portions 400, the second bent portions 500, the first overlapping portion 600, the third bent portions 800, the fourth bent portions 900, and the second overlapping portion 950, which are essential characteristics of the present disclosure, will be described in detail.

Referring to FIG. 2, the first bent portions 400 refer to portions where a plurality of cathode leads 130 are bent at a point spaced apart from the cathode coating layer 120 by a predetermined distance. In this case, it is preferable to form the first bent portions 400 to be spaced apart from the outermost positioned one of the cathode 100, the anode 200, and the separation membrane 300. In FIG. 2, since the separation membrane 300 of the cathode 100, the anode 200, and the separation membrane 300 is positioned at the outermost side, it is preferable to form the first bent portions 400 to be spaced apart from the separation membrane 300 by a predetermined distance. As will be described later in a manufacturing method of a lithium ion secondary battery according to an exemplary embodiment of the present disclosure, a shape and a formation position of the first bent portion 400 may be more precisely adjusted by using support pins 20 according to an exemplary embodiment.

Referring to FIG. 2, the second bent portions 500 may refer to portions where the plurality of cathode leads 130 are bent at points where the plurality of cathode leads 130 bent at the first bent portions 400 meet, and the first overlapping portion 600 may refer to a portion where the plurality of cathode leads 130 bent at the second bent portions 500 overlap in parallel. Here, the first overlapping portion 600 may be in a state in which only a portion thereof is welded from end portions of the plurality of cathode leads 130 overlapping in parallel and the remaining portion thereof is not welded.

Specifically, the first overlapping portion 600 may include a first welded portion 610 to which the plurality of cathode leads 130 are welded and a first non-welded portion 620 to which the plurality of cathode leads 130 are not welded. Here, the first non-welded portion 620 may be formed between the first welded portion 610 and the second bent portions 500, and according to an exemplary embodiment, a length of the first non-welded portion 620 is preferably formed of 2 mm or more.

The lithium ion secondary battery according to an exemplary embodiment of the present disclosure may further include a cathode tab welding portion 700. Here, the cathode tab welding portion 700 refers to a portion where the first welded portion 610 and a cathode tab 140 are welded. The cathode tab 140, as an end tab of the cathode side of the lithium ion secondary battery, may be disposed on one end of the battery. A portion of the cathode tab 140 may be covered by the case 970 and another portion thereof may extend to outside of the battery for an electrical connection. The second bent portions 500 described above are preferably formed to be spaced apart from an end portion of the cathode tab welding portion 700 by a predetermined distance.

The third bent portions 800 refer to portions in which a plurality of anode leads 230 are bent at points spaced apart from the anode coating layer 220 by a predetermined distance. In this case, it is preferable to form the third bent portions 800 to be spaced apart from the outermost positioned one of the cathode 100, the anode 200, and the separation membrane 300. In FIG. 2, since the separation membrane 300 of the cathode 100, the anode 200, and the separation membrane 300 is positioned at the outermost side, it is preferable to form the third bent portions 800 to be spaced apart from the separation membrane 300 by a predetermined distance. As will be described later in a manufacturing method of a lithium ion secondary battery according to an exemplary embodiment of the present disclosure, a shape and a formation position of the third bent portion 800 may be more precisely adjusted by using support pins 20 according to an exemplary embodiment.

Referring to FIG. 2, the fourth bent portions 900 may refer to portions where the plurality of anode leads 230 are bent at points where the plurality of anode leads 230 bent at the third bent portions 300 meet, and the second overlapping portion 950 may refer to a portion where the plurality of anode leads 230 bent at the fourth bent portions 900 overlap in parallel. Here, the second overlapping portion 950 may be in a state in which only a portion thereof is welded from end portions of the plurality of anode leads 230 overlapping in parallel and the remaining portion thereof is not welded.

Specifically, the second overlapping portion 950 may include a second welded portion 951 to which the plurality of anode leads 230 are welded and a second non-welded portion 952 to which the plurality of anode leads 230 are not welded. Here, the second non-welded portion 952 may be formed between the second welded portion 951 and the fourth bent portions 900, and according to an exemplary embodiment, a length of the second non-welded portion 952 is preferably formed of 2 mm or more.

The lithium ion secondary battery according to an exemplary embodiment of the present disclosure may further include an anode tab welding portion 960. Here, the anode tab welding portion 960 refers to a portion where the second welded portion 951 and an anode tab 240 are welded. The anode tab 240, as an end tab of the anode side of the lithium ion secondary battery, may be disposed on another end of the battery opposite to the cathode tab 140. A portion of the anode tab 240 may be covered by the case 970 and another portion thereof may extend to outside of the battery for an electrical connection. The fourth bent portions 950 described above are preferably formed to be spaced apart from an end portion of the anode tab welding portion 960 by a predetermined distance.

Compared with the conventional lithium ion secondary battery, the effect of the lithium ion secondary battery according to the present disclosure is described with reference to FIG. 6 as follows.

As described above, the lithium ion secondary battery according to an exemplary embodiment of the present disclosure includes the second bent portions and the first overlapping portion, in which the first non-welded portion and the second bent portions are unfolded when the electrode swells after the battery cell is charged by forming the first non-welded portion on the first overlapping portion. Therefore, unlike the related art, interference between the cathode lead and the anode may be prevented, and the damage to the anode and ignition that may occur due to a short circuit between the cathode lead and the anode may be prevented, thereby improving stability of the cell.

Hereinafter, a manufacturing method of a lithium ion secondary battery according to an exemplary embodiment of the present disclosure will be described with reference to FIGS. 3 to 5.

As illustrated in FIG. 3, a manufacturing method of a lithium ion secondary battery according to an exemplary embodiment of the present disclosure may include an operation (S100) of stacking a plurality of anodes, a plurality of separation membranes, and a plurality of cathodes, an operation (S200) of forming a first overlapping portion by pressing and bending a plurality of cathode leads stacked at points spaced apart from a cathode coating layer by a first predetermined distance and overlapping and fixing the plurality of cathode leads in parallel at a point where the plurality of bent cathode leads meet, and an operation (S300) of welding only a portion of the first overlapping portion from end portions of the plurality of cathode leads.

Specifically, the operation (S200) of forming a first overlapping portion by pressing and bending a plurality of cathode leads stacked at points spaced apart from a cathode coating layer by a first predetermined distance and overlapping and fixing the plurality of cathode leads in parallel at a point where the plurality of bent cathode leads meet may include an operation (S210) of simultaneously pressing and bending the plurality of cathode leads stacked in parallel from the top and bottom using a pair of lead fixing jigs 10 at points spaced apart from the cathode coating layer by a first predetermined distance and operation (S220) of overlapping and fixing the plurality of cathode leads in parallel by pressing the plurality of bent cathode leads using the pair of lead fixing jigs until the plurality of bent cathode leads meet.

Referring to FIG. 4, according to an exemplary embodiment, the operation (S200) of forming a first overlapping portion by pressing and bending a plurality of cathode leads stacked at points spaced apart from a cathode coating layer by a first predetermined distance and overlapping and fixing the plurality of cathode leads in parallel at a point where the plurality of bent cathode leads meet may include an operation (S230) of simultaneously pressing and bending the plurality of cathode leads stacked in parallel from the top and bottom using a pair of lead fixing jigs including an air nozzle at points spaced apart from the cathode coating layer by a first predetermined distance and operation (S240) of overlapping and fixing the plurality of cathode leads in parallel by pressing the plurality of bent cathode leads using the pair of lead fixing jigs including the air nozzle until the plurality of bent cathode leads meet.

Referring to FIG. 5, according to another exemplary embodiment, the operation (S200) of forming a first overlapping portion by pressing and bending a plurality of cathode leads stacked at points spaced apart from a cathode coating layer by a first predetermined distance and overlapping and fixing the plurality of cathode leads in parallel at a point where the plurality of bent cathode leads meet may include an operation (S250) of simultaneously pressing and bending the plurality of cathode leads stacked in parallel from the top and bottom using a pair of lead fixing jigs including a plurality of air nozzles at points spaced apart from the cathode coating layer by a first predetermined distance and an operation (S260) of overlapping and fixing the plurality of cathode leads in parallel by pressing the plurality of bent cathode leads using the pair of lead fixing jigs including the plurality of air nozzles until the plurality of bent cathode leads meet.

Specifically, the operation (S250) of simultaneously pressing and bending the plurality of cathode leads stacked in parallel from the top and bottom using a pair of lead fixing jigs including a plurality of air nozzles at points spaced apart from the cathode coating layer by a first predetermined distance may include an operation (S251) of raising and lowering the pair of lead fixing jigs by a predetermined distance as air is ejected obliquely to the outermost side from an air nozzle located at the outermost side of the plurality of air nozzles and an operation (S252) of ejecting air from an air nozzle located at the innermost side after raising and lowering the pair of lead fixing jigs by the predetermined distance. Here, the lead fixing jig 10 may include a first air nozzle 11 and a second air nozzle 12, and according to an exemplary embodiment, the first air nozzle 11 may be the air nozzle located at the outermost side and the second air nozzle 12 may be the air nozzle located at the innermost side. However, as described above, if the air nozzles may serve as the air nozzle located at the outermost side and the air nozzle located at the innermost side, the positions of the first air nozzles 11 and the second air nozzles 12 may be changed according to the exemplary embodiment.

Meanwhile, referring to FIG. 5, the manufacturing method of a lithium ion secondary battery may further include an operation (S120) of inserting support pins 20 in a direction perpendicular to the cathode leads in a direction in which the cathode leads are bent at points spaced apart from the cathode coating layer by a second predetermined distance, before the operation of simultaneously pressing and bending the plurality of cathode leads stacked in parallel from the top and bottom using a pair of lead fixing jigs including a plurality of air nozzles at points spaced apart from the cathode coating layer by a first predetermined distance.

As such, the manufacturing method of a lithium ion secondary battery according to another exemplary embodiment of the present disclosure includes the operation (S120) of inserting support pins 20 in a direction perpendicular to the cathode leads in a direction in which the cathode leads are bent at points spaced apart from the cathode coating layer by a second predetermined distance, before the operation of simultaneously pressing and bending the plurality of cathode leads stacked in parallel from the top and bottom using a pair of lead fixing jigs including a plurality of air nozzles at points spaced apart from the cathode coating layer by a first predetermined distance, whereby a shape and a formation position of the first bent portion may be more finely adjusted and interference between the cathode lead and the anode may be thus prevented when the electrode swells after the lithium ion secondary battery is charged, thereby more improving stability of a cell.

Meanwhile, the manufacturing method of a lithium ion secondary battery according to an exemplary embodiment of the present disclosure may further include an operation (S400) of forming a second overlapping portion by pressing and bending a plurality of anode leads stacked at points spaced apart from an anode coating layer by a first predetermined distance and overlapping and fixing the plurality of anode leads in parallel at a point where the plurality of bent anode leads meet and an operation (S500) of welding only a portion of the second overlapping portion from end portions of the plurality of anode leads.

Specifically, according to an exemplary embodiment, the operation (S400) of forming a second overlapping portion by pressing and bending a plurality of anode leads stacked at points spaced apart from an anode coating layer by a first predetermined distance and overlapping and fixing the plurality of anode leads in parallel at a point where the plurality of bent anode leads meet may include an operation (S410) of simultaneously pressing and bending the plurality of anode leads stacked in parallel from the top and bottom using a pair of lead fixing jigs including an air nozzle at points spaced apart from the anode coating layer by a first predetermined distance and an operation (S420) of overlapping and fixing the plurality of anode leads in parallel by pressing the plurality of bent anode leads using the pair of lead fixing jigs until the plurality of bent anode leads meet.

According to another exemplary embodiment, the operation (S400) of forming a second overlapping portion by pressing and bending a plurality of anode leads stacked at points spaced apart from an anode coating layer by a first predetermined distance and overlapping and fixing the plurality of anode leads in parallel at a point where the plurality of bent anode leads meet may include an operation (S430) of simultaneously pressing and bending the plurality of anode leads stacked in parallel from the top and bottom using a pair of lead fixing jigs including a plurality of air nozzles at points spaced apart from the anode coating layer by a first predetermined distance and an operation (S440) of overlapping and fixing the plurality of anode leads in parallel by pressing the plurality of bent anode leads using the pair of lead fixing jigs until the plurality of bent anode leads meet.

More specifically, the operation (S430) of simultaneously pressing and bending the plurality of anode leads stacked in parallel from the top and bottom using a pair of lead fixing jigs including a plurality of air nozzles at points spaced apart from the anode coating layer by a first predetermined distance may include an operation (S431) of raising and lowering the pair of lead fixing jigs by a predetermined distance as the air is ejected obliquely to the outermost side from an air nozzle located at the outermost side of the plurality of air nozzles and an operation (S432) of ejecting the air from an air nozzle located at the innermost side after raising and lowering the pair of lead fixing jigs by the predetermined distance.

Meanwhile, the manufacturing method of a lithium ion secondary battery may further include an operation of inserting support pins 20 in a direction perpendicular to the anode leads in a direction in which the anode leads are bent at points spaced apart from the anode coating layer by a second predetermined distance, before the operation of simultaneously pressing and bending the plurality of anode leads stacked in parallel from the top and bottom using a pair of lead fixing jigs including a plurality of air nozzles at points spaced apart from the anode coating layer by a first predetermined distance.

As such, the manufacturing method of a lithium ion secondary battery according to the present disclosure further includes the operation of inserting support pins 20 in a direction perpendicular to the anode leads in a direction in which the anode leads are bent at points spaced apart from the anode coating layer by a second predetermined distance, before the operation of simultaneously pressing and bending the plurality of anode leads stacked in parallel from the top and bottom using a pair of lead fixing jigs including a plurality of air nozzles at points spaced apart from the anode coating layer by a first predetermined distance, whereby a shape and a formation position of the third bent portion may be more finely adjusted and the stability of the cell may be improved when the electrode swells after the lithium ion secondary battery is charged.

Meanwhile, in the operation (S300) of welding only a portion of the first overlapping portion from end portions of the plurality of cathode leads and the operation (S500) of welding only a portion of the second overlapping portion from end portions of the plurality of anode leads, only the portions from the end portions of the plurality of cathode leads and anode leads may be welded through an ultrasonic welder according to an exemplary embodiment. According to an exemplary embodiment, an elastic material may be attached to a surface of the lead fixing jig 10 used in the manufacturing method of a lithium ion secondary battery according to the present disclosure in contact with the cathode lead and the anode lead. As such, by attaching the elastic material to the surface of the lead fixing jig 10 used in the manufacturing method of a lithium ion secondary battery according to the present disclosure in contact with the cathode lead and the anode lead, the elastic material may absorb vibration generated by an ultrasonic welder, thereby preventing the vibration from propagating into the electrode and minimizing the dropping of the active material coated on the electrode.

Meanwhile, the manufacturing method of a lithium ion secondary battery may further include, after welding only the portion of the first overlapping portion from the end portions of the plurality of cathode leads and welding only the portion of the second overlapping portion from the end portions of the plurality of anode leads, an operation of forming a cathode tab welded portion by welding a welded portion of the first overlapping portion and a cathode tab, and an operation of forming an anode tab welded portion by welding a welded portion of the second overlapping portion and an anode tab. Further, the manufacturing method of a lithium ion secondary battery may further include an operation of covering a battery cell with the case 970 after an assembly of the battery cell is completed.

The manufacturing method of a lithium ion secondary battery according to the present disclosure described above has the following effects.

First, when the cathode lead and the anode lead are pressed using the lead fixing jig, the lead fixing jip is raised and lowered while ejecting the air and generates the vibration in the cathode lead and the anode lead, and the generated vibration is propagated into the electrode to minimize friction force between the leads, thereby making it possible to minimizing deformation of the electrode.

In addition, when the cathode lead and the anode lead are pressed using the lead fixing jig, the lead fixing jip is raised and lowered while ejecting the air to minimize friction force between the leads, thereby making it possible to minimizing deformation of the electrode when the cathode lead and the anode lead are bent.

Further, when the lead fixing jigs including the plurality of air nozzles are used, by raising and lowering the pair of lead fixing jigs by the predetermined distance as the air is ejected obliquely to the outermost side from the air nozzle located at the outermost side of the plurality of air nozzles, the cathode lead and the anode lead may be bent the positions farther from the electrode, thereby forming the non-welded portion sections with a margin. As a result, when the electrode swells after the lithium ion secondary battery is charged, the damage to the electrode due to the interference between the lead portion and the electrode and the occurrence of ignition due to a short circuit between the lead portion and the electrode may be prevented, thereby improving the stability of the cell.

Although the present disclosure has been shown and described with respect to specific embodiments, it will be apparent to those having ordinary skill in the art that the present disclosure may be variously modified and altered without departing from the spirit and scope of the present disclosure as defined by the following claims.

## Claims

1. A lithium ion secondary battery comprising:
a plurality of cathodes each including a cathode current collector, a cathode coating layer coating the cathode current collector, and a cathode lead;
a plurality of anodes each including an anode current collector, an anode coating layer coating the anode current collector, and an anode lead; and
a plurality of separation membranes arranged between the plurality of cathodes and the plurality of anodes, respectively,
wherein a plurality of cathode leads among the plurality of cathodes include first bent portions, respectively, at first points spaced apart from respective cathode coating layers by a predetermined distance,
wherein the plurality of cathode leads further include second bent portions, respectively, at second points where the plurality of cathode leads meet,
wherein the lithium ion secondary battery further includes a first overlapping portion at which the plurality of cathode leads overlap in parallel,
wherein the first overlapping portion includes a first welded portion to which the plurality of cathode leads are welded and a first non-welded portion to which the plurality of cathode leads are not welded,
wherein the first welded portion is welded to end portions of the plurality of cathode leads overlapping in parallel and a remaining portion of the first overlapping portion is not welded to the end portions of the plurality of cathode leads.

2. The lithium ion secondary battery of claim 1, further comprising a cathode tab disposed on a first end portion of the lithium ion secondary battery,
wherein the first welded portion and the cathode tab are welded to each other at a cathode tab welded portion disposed therebetween, and
wherein the second bent portions are spaced apart from an end of the cathode tab welded portion by a predetermined distance.

3. The lithium ion secondary battery of claim 1 or 2, wherein the first non-welded portion is arranged between the first welded portion and the second bent portions, and
a length of the first non-welded portion is 2 mm or more.

4. The lithium ion secondary battery of claim 1 to 3, wherein:
a plurality of anode leads among the plurality of anodes include third bent portions, respectively, at third points spaced apart from respective anode coating layers by a predetermined distance,
the plurality of anode leads further include fourth bent portions, respectively, at fourth points where the plurality of anode leads meet,
the lithium ion secondary battery further includes a second overlapping portion where the plurality of anode leads at the fourth points overlap in parallel, and
the second overlapping portion includes a second welded portion to which the plurality of anode leads are welded and a second non-welded portion to which the plurality of anode leads are not welded, and
the second welded portion is welded to end portions of the plurality of anode leads overlapping in parallel and a remaining portion of the second overlapping portion is not welded to the end portions of the plurality of anode leads.

5. The lithium ion secondary battery of claim 4, further comprising an anode tab disposed on a second end portion of the lithium ion secondary battery,
wherein the second welded portion and the anode tab are welded to each other at an anode tab welded portion disposed therebetween, and
wherein the fourth bent portions are spaced apart from an end of the anode tab welded portion by a predetermined distance,
wherein the second non-welded portion is arranged between the second welded portion and the fourth bent portions, and
a length of the second non-welded portion is 2 mm or more.

6. The lithium ion secondary battery of claim 4 or 5, wherein the first bent portions or the third bent portions are spaced apart from an outermost one of the plurality of anodes, the plurality of separation membranes, and the plurality of cathodes.

7. A manufacturing method of a lithium ion secondary battery comprising steps of:
stacking a plurality of anodes, a plurality of separation membranes, and a plurality of cathodes;
forming a first overlapping portion by pressing and bending a plurality of cathode leads at first points spaced apart from respective cathode coating layers by a first predetermined distance and by overlapping and fixing the plurality of cathode leads in parallel at second points where the plurality of bent cathode leads meet; and
welding a portion of the first overlapping portion to end portions of the plurality of cathode leads.

8. The manufacturing method of claim 7, wherein the step of forming a first overlapping portion includes steps of:
simultaneously pressing and bending the plurality of cathode leads stacked in parallel from the top and bottom using a pair of lead fixing jigs at the first points spaced apart from the respective cathode coating layers by the first predetermined distance; and
overlapping and fixing the plurality of cathode leads in parallel by pressing the plurality of bent cathode leads using the pair of lead fixing jigs until the plurality of cathode leads meet.

9. The manufacturing method of claim 7, wherein the step of forming a first overlapping portion includes steps of:
simultaneously pressing and bending the plurality of cathode leads stacked in parallel using a pair of lead fixing jigs including one or more air nozzle at the first points spaced apart from the respective cathode coating layers by the first predetermined distance; and
overlapping and fixing the plurality of cathode leads in parallel by pressing the plurality of bent cathode leads using the pair of lead fixing jigs until the plurality of cathode leads meet.

10. The manufacturing method of claim 9, wherein the step of simultaneously pressing and bending the plurality of cathode leads stacked in parallel using a pair of lead fixing jigs including one or more air nozzles includes steps of:
raising and lowering the pair of lead fixing jigs by a predetermined distance as air is ejected obliquely to an outermost side of one or more air nozzles from an air nozzle located at the outermost side of the one or more air nozzles; and
ejecting air from an air nozzle located at an innermost side of the one or more air nozzles after raising and lowering the pair of lead fixing jigs by the predetermined distance.

11. The manufacturing method of claim 9 or 10, further comprising a step of: before the step of simultaneously pressing and bending the plurality of cathode leads stacked in parallel using a pair of lead fixing jigs including one or more air nozzles,
inserting support pins in a direction perpendicular to the plurality of cathode leads in a direction in which the plurality of cathode leads are bent at points spaced apart from the respective cathode coating layers by a predetermined distance.

12. The manufacturing method of claim 7 to 11, further comprising steps of:
forming a second overlapping portion by pressing and bending a plurality of anode leads at points spaced apart from respective anode coating layers by the first predetermined distance and overlapping and fixing the plurality of anode leads in parallel at a point where the plurality of bent anode leads meet; and
welding a portion of the second overlapping portion to end portions of the plurality of anode leads.

13. The manufacturing method of claim 12, wherein the step of forming a second overlapping portion includes steps of:
simultaneously pressing and bending the plurality of anode leads stacked in parallel using a pair of lead fixing jigs including one or more air nozzle at points spaced apart from the respective anode coating layers by the first predetermined distance; and
overlapping and fixing the plurality of anode leads in parallel by pressing the plurality of bent cathode leads using the pair of lead fixing jigs until the plurality of bent cathode leads meet.

14. The manufacturing method of claim 13, wherein the step of simultaneously pressing and bending the plurality of anode leads stacked in parallel using a pair of lead fixing jigs including one or more air nozzles includes:
raising and lowering the pair of lead fixing jigs by a predetermined distance as air is ejected obliquely to an outermost side of the one or more air nozzles from an air nozzle located at the outermost side of the one or more air nozzles; and
ejecting air from an air nozzle located at an innermost side of the one or more air nozzles after raising and lowering the pair of lead fixing jigs by the predetermined distance.

15. The manufacturing method of claim 13 or 14, further comprising: before the step of simultaneously pressing and bending the plurality of anode leads stacked in parallel using a pair of lead fixing jigs including one or more air nozzles,
inserting support pins in a direction perpendicular to the anode leads in a direction in which the plurality of anode leads are bent at points spaced apart from the respective anode coating layers by a predetermined distance.
